# EUROPEAN PATENT SPECIFICATION

(11) **EP 4 160 091 B1**
(45) Date of publication and mention of the grant of the patent: **04.09.2024**
(21) Application number: 21200164.8
(22) Date of filing: 30.09.2021
(51) Int. Cl.: F22B 21/12, F22B 21/20, F22B 1/18

(54) **HEAT RECOVERY STEAM GENERATOR WITH A HEAT EXCHANGER TUBE BUNDLE**
DAMPFGENERATOR ZUR WÄRMERÜCKGEWINNUNG MIT EINEM WÄRMETAUSCHERROHRBÜNDEL
GÉNÉRATEUR DE VAPEUR À RÉCUPÉRATION DE CHALEUR AVEC UN FAISCEAU DE TUBES D'ÉCHANGEUR DE CHALEUR

(43) Date of publication of application: 05.04.2023
(73) Proprietor: NEM Energy B.V., 2382 BL Zoeterwoude (NL)
(72) Inventor: Rop, Peter, 81739 Munich (DE); Perrone, Francesco, 81739 Munich (DE); Cebotaru, Aniela, 81739 Munich (DE)
(74) Representative: Zimmermann & Partner Patentanwälte mbB

(56) References cited:
- FR-A1- 2 323 950
- JP-A- H03 117 801
- JP-A- H11 287 402
- US-A- 1 743 326
- US-A1- 2006 075 977

## Description

The present invention relates to heat recovery steam generator of horizontal gas path design with a heat exchanger, such as an economizer tube bundle, and a combined cycle power plant.

Heat exchanger tube bundles in heat recovery steam generators are used to warm up or heat an incoming fluid, condensate or feed water to almost saturated conditions. Different heat transfer concepts result in different heating surface sizes, depending on the performance and effectiveness of the particular configuration. Moreover, cost and/or operational complexity of the steam generator system is affected not only by the configuration of the heating surface of the related heat exchanger, but also by the complexity and effort required to connect each tube row or tube bundle to the next. At least for horizontal path heat recovery steam generators - for which tube orientation is consequently vertical - it is important to maintain or achieve a proper optimum or minimum feed water velocity inside the tubes under the relevant operating conditions. For heat exchangers where the operating fluid is water, such as an economizer, this is in order to avoid e.g. flow instability, like an irregular or even stagnant or reversed water flow. This may in turn lead to a significant loss of performance, overheating of the related tube bundle and damage of the overall system. Heat exchangers are known from JPH-11-287402 A; US 1,743,326 A, FR 2 323 950 A1, US 2006/075977 A1, and JPH 03-117801 A.

Most common heat exchanger concepts for horizontal heat recovery steam generators make use of a design with a series of similar racks. In order to maximize an effective surface area for heat exchange, several tube rows are usually connected to an inlet and to an outlet or related headers.

During an operation of such heat exchangers, a fluid is guided through the tubes of the tube bundle. In case of heat exchangers operating with water, such as economizers the fluid is particularly fed to the parallel tubes or tube rows of the bundle through the inlet header and e.g. collected in the outlet header. In order to generate or uphold a favorable velocity of water passing through the tube bundle, e.g. partition plates are usually welded inside the headers.

Such partition plates aim to create a number of subsequent circuits (tube passes) in which the feed water is forced to pass several times through the same rack in up and down flow direction. Subsequent racks or so-called "harps" are connected to each other by means of external piping elements, or so-called "crossovers" for instance. A main disadvantage of this principle is its low effectiveness in heat recovery or exchanging heat with an exhaust or flue gas, such as an exhaust gas of a gas turbine. This is due to the inherently unfavorable crossflow properties of the design, rendering the principle inefficient as regards heat recovery. Particularly, not all of the exhaust gas can - according to this principle - be exposed to the cold water and therefore be cooled to the lowest possible temperature. Consequently, heat recovery efficiency or as the case may be the amount of exchanged heat is reduced as compared to a principal achieving a lower number of tube passes per row.

Another known concept provides single tube rows which are connected in a series to inlet and outlet headers having usually smaller dimensions. The latter concept provides the advantage of dispensing with crossovers and of a higher overall efficiency of heat recovery. However, a drawback of this concept relates to its constructability being much less compact than the above-mentioned one. In turn, this also leads to an increased overall cost. Another disadvantage lies in the impossibility to tune water or fluid velocity, for an acceptable pressure drop, towards a balance or stable state which can be facilitated by partition plates.

It is an object of the present invention to provide an optimized heat exchanger design, particularly a design of an improved heat exchanger tube bundle. Preferably, the presented novel configuration combines the advantages of known methods, whereas - at the same time - its drawbacks can be reduced or prevented at all.

The mentioned object is achieved by the subject-matters of the independent claims. Advantageous embodiments are subject-matters of the dependent claims.

An aspect of the present invention relates to a heat recovery steam generator of horizontal gas path design comprising a heat exchanger tube bundle, wherein the heat exchanger tube bundle is functionally set up for transferring (waste) heat from a flue gas, such as exhausted by a gas turbine, to a feed water when passing it through the tube bundle. The heat exchanger tube bundle is of a horizontal gas path design, the tube bundle comprising a sequence or series of bottom headers and corresponding top headers, wherein each (header) unit of the sequence comprises a row of tubes for exchanging heat like a flue gas, wherein each bottom header is fluidly connected to a corresponding top header via at least two similar tube rows for passing a fluid, like e.g. feed water, in a first direction between the bottom header and the top header or through the similar tubes of the row, respectively. Each unit of the sequence further comprises at least one further tube row in fluid connection with (only) one of said bottom and top header, wherein the further tube row is further fluidly connected to a header of a subsequent or approximate unit, and wherein the further row's tubes are configured for passing the fluid in a second direction opposite to the first direction. The heat exchanger tube bundle is preferably configured for an application of a heat recovery steam generator. Particularly, the provided configuration of flow tubes inherently allows to tackle the above-mentioned challenges, and therewith to provide for a far improved heat exchanger design. In this way, the stringent demands of today's energy transition and related challenges for efficient components is addressed.

In an embodiment, the heat exchanger tube bundle comprises only two similar tube rows and only one further tube row. This advantageously allows for an easy, robust and simple construction, and at the same time to tailor and/or optimize flow, particularly downflow, stability and to avoid any related feed water flow reversion and/or disturbance.

In an embodiment, the heat exchanger tube bundle is configured for only one fluid pass per tube, or as the case may be, per tube row.

In an embodiment, the similar row's tubes are configured for an upflow fluid pass, and the further row's tubes are configured for a downflow fluid pass.

According to these embodiments, upflow and downflow dynamics are already (or can be) optimized by the presented tube setup, e.g. featuring a favorable balance of up- and downflow behavior. Similarly, flow instabilities can advantageously be avoided, or a stable operating range extended.

In an embodiment, the similar row's tubes are of equal dimension and a cross section of the further row's tubes differs from that one of the similar row's tubes. Likewise, this embodiment advantageously enables to maintain stable upflow dynamics, and to reduce flow instabilities.

According to the invention, the cross section of the further row's tubes is smaller than that one of the similar row's tubes. This can be achieved e.g. by selecting a smaller tube diameter or fewer tubes per row of the downflow tubes.

These embodiments further enable an optimization of flow dynamics through the tubes during an operation of the heat exchanger. At the same time, heat transfer efficiency can advantageously be optimized.

In an embodiment, the heat exchanger tube bundle comprises more than two similar tube rows per (header) unit.

In an embodiment, the heat exchanger tube bundle comprises more than two further tube rows per unit.

In an embodiment the heat exchanger tube bundle is free of partition plates, crossovers and/or external piping. This embodiment advantageously eases construction, particularly saves material and additional welding effort, and also allows to achieve an improved heat transfer efficiency (see above). A further aspect of the present invention relates to a heat exchanger comprising the tube bundle as described herein.

A further aspect of the present invention relates to a combined cycle power plant, wherein the heat exchanger tube bundle is applied in an economizer and/or an evaporator of the power plant. Expediently, the power plant may to this effect comprise a steam turbine and a gas turbine or be functionally coupled to said turbines.

The invention allows for a method of heat recovery or heat transfer from an exhaust gas in the heat exchanger, such as within an intended operation of the heat exchanger or heat recovery steam generator. To this effect, the exhaust gas may be provided by a gas turbine engine or similar entity. In fact any source of (waste) heat, even when provided otherwise than through a gas turbine exhaust, can be contemplated. Moreover, the generated steam may be used as a working fluid in a steam turbine and/or as process steam for any other industrial application.

Advantages and embodiments relating to the described heat exchanger (tube bundle) and/or the described heat recovery steam generator may as well pertain or be valid with regard to the power plant and vice versa.

Further, features and advantageous embodiments become apparent from the following description of the exemplary embodiment in connection with the Figures.
Figure 1 shows a simplified perspective view on a heat exchanger design as economizer of the prior art.
Figure 2 shows a simplified side view of another heat exchanger design as economizer of the prior art.
Figure 3 indicates - similarly to Figure 2 - a simplified side view of a heat exchanger tube bundle of the present invention.
Figure 4 indicates in a simplified sketch a combined cycle power plant, along with an inventive heat exchanger as shown in Figure 3 being functionally integrated to the power plant process.

Like elements, elements of the same kind and identically acting elements may be provided with the same reference numerals in the Figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

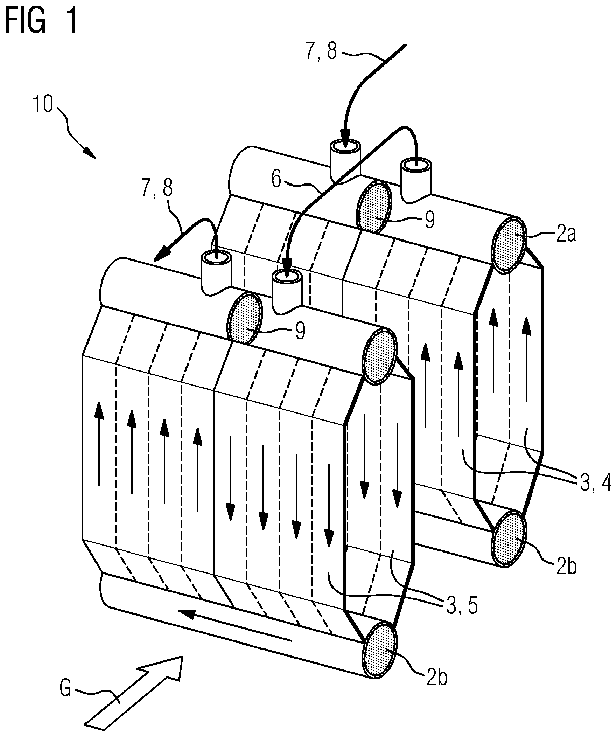

Figure 1 shows a known principle of a heat exchanger, particularly an economizer 10 for a heat recovery steam generator (HRSG) application in a horizontal gas path design. The heat exchanger as shown preferably relates to a so-called "harp" design. The component 10 comprises a plurality of such harps or racks, wherein two racks are exemplarily depicted in Figure 1 in a series connection, which are connected to each other by means of external piping elements 6, also called "crossovers". In order to maximize a heat transfer-effective surface for each rack, several rows of tubes 3 are connected to inlet and outlet collecting headers 2a, 2b, respectively.

For the sake of simplicity, tubes 3 are only depicted schematically, wherein the dashed lines shall indicate an interspace and/or separation between different tubes in a row.

Reference numeral 4 as used herein shall particularly denote a so-called upflow tube, whereas reference numeral 5 shall indicate a downflow tube, all of which characterizing the horizontal path design of heat recovery steam generators for the related heat exchanger section.

During an operation of the economizer, incoming water (not explicitly indicated) is fed to the parallel tubes 3 through the respective inlet header and collected in the corresponding outlet header (cf. as well arrows in the Figures indicating flow direction of the feed water during an intended operation.

In order to ensure a favorable feed water velocity partition plates 9 (only partially indicated in the Figures) are welded inside the headers 2, which effectuate creation of a number of subsequent or separated water circuits - also called "passes per row" or "tube passes". According to this embodiment of the economizer, the partition plates 9 force the feed water to pass several times, e.g. twice, through the same rack in up and down flow direction. Thus, for each rack, a number of tubes are grouped in the design of the heat exchanger as shown in Figure 1.

Furthermore, numeral 7 indicates a general feed water inlet, whereas numeral 8 indicates a related water outlet in the depicted tube bundle 10. Depending on the intended fluid flow direction, an inlet may principally relate to an outlet, and vice versa.

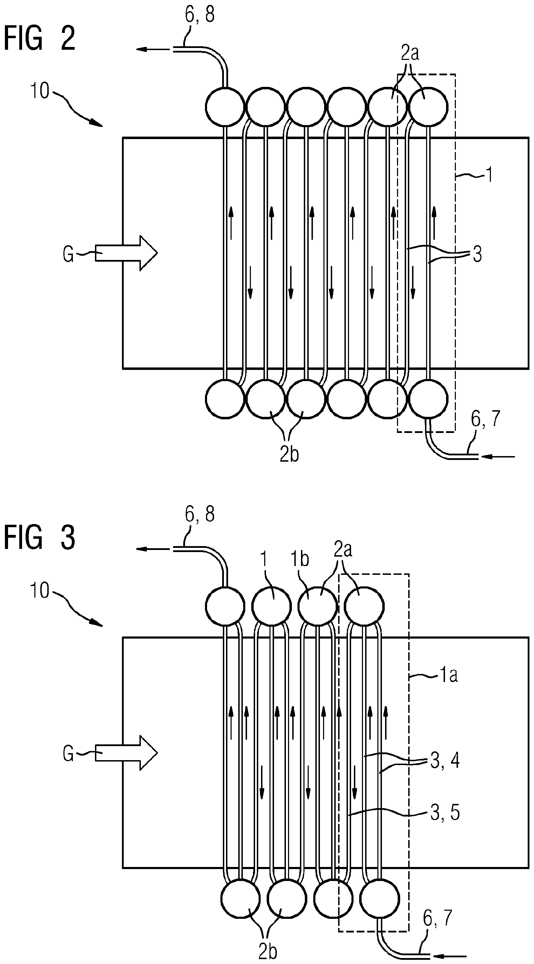

A main technical drawback of this configuration is its quite complex design and relatively low effectiveness in exchanging heat with the exhaust gas, the course of which is indicated by the larger arrow and numeral G. In fact, since not all exhaust gas G can be exposed to the coldest, i.e. upstream, feed water, also not the whole share of heat of gas G can be extracted by the heat exchanger 10 and transferred to the feed water. In other words, the gas can in this way not be cooled to the lowest possible temperature; or as the case may be, the water heated to the maximum possible temperature. Consequently, heat exchange is reduced due to this less favorable crossflow geometry, as compared to the inventive design as shown in Figures 3 onwards, for instance.

Figure 2 shows an alternative (known) heat exchanger concept that may pertain to a so-called "harmonica"-type of economizer used for horizontal path HRSG applications. Therein, single, parallel tube or tube rows 3 are arranged in a series and each of which (or each row) connected to a top header 2a and an bottom header 2b. Each bottom header 2b is preferably fluidly connected via an upflow tube 4 with the corresponding top header 2a. Such a sequential unit 1 of the whole component 10 is encircled by a dashed square. In total, six sequential units or tube elements are shown connected in series.

The larger square (not explicitly indicated) between the headers 2a, 2b indicates an exhaust or flue gas channel, the economizer is, preferably subjected to in its intended operation, such as an operation of a related steam generator. Again, the arrow G indicates a possible direction of exhaust gas for the expedient heat transfer.

As compared to the "harp-design" of Figure 1, this concept stands out for a higher heat transfer efficiency due to a lack of crossflow loops. However, a main disadvantage relates to the constructability and/or a less compact design which increases the overall costs. Another disadvantage compared to the harp design is the impossibility to tune feed water velocity and a related flow stability, for an acceptable pressure drop, due to a lack of partition plates or similar measures.

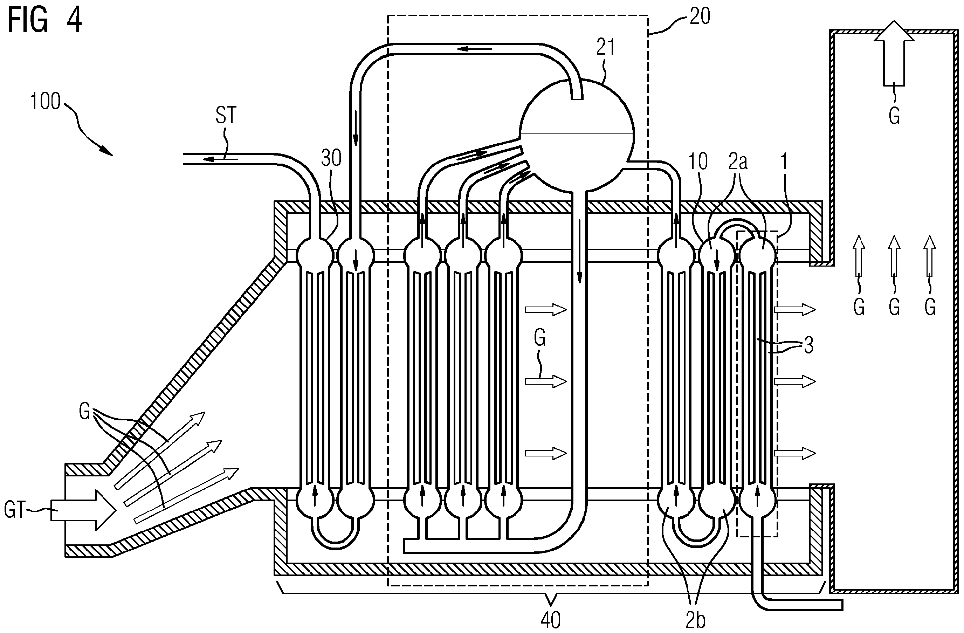

Figure 3 illustrates a simplified sketch of a heat exchanger design featuring a tube bundle according to the present invention. Said heat exchanger 10 may as well be set up for heat recovery steam generators (cf. Figure 4 below). This tube bundle 10 comprises a sequence 1 of bottom headers 2b and corresponding top headers 2a, wherein each unit 1a of the sequence comprises a row of tubes, wherein each bottom header 2b is fluidly connected to a corresponding top header 2a via at least two similar tube rows 3 for passing a fluid in a first direction between the bottom header 2b and the top header 2a, respectively. The presented heat exchanger 10 is further characterized in that each unit of the sequence further comprises at least one further tube row 3 in fluid connection with one of said bottom and top header, wherein the further tube row is further fluidly connected to a header of a subsequent unit 1b. The further row's tubes 3 are configured for passing the fluid preferably in a second direction opposite to the first direction (cf. again arrows indicating the flow directions of a fluid guided through the tube rows in an operation of the heat exchanger 10).

As shown in Figure 1, this configuration of heat exchanger tube bundle comprises a number of only four connected serial header units.

In contrast to the known bundle configuration as described by way of Figure 2, particularly two upflow tubes 4 (each of which shall indicate a whole row of tubes connecting the bottom header and the top header in Figure 3) are arranged in fluid communication for a fluid or feed water flow from a given bottom header 2b to the top header 2a, respectively.

Preferably, as indicated in Figure 3, the tube bundle 10 comprises only two upflow tubes 3, 4 and only one downflow tube 3, 5 per unit. It is further shown that the tube bundle 10 is configured such that it allows for only one fluid or water pass per tube or tube row.

Of course, it is contemplated by the present invention, that the fluid flow direction could as well be established vice versa, i.e. such that there are two (similar) downflow rows 3, 5 per unit and e.g. only one (further) row set up for an upwardly guided fluid.

It is possible, though not covered by the invention, that similar row's tubes 3, 4 and the further row's tubes 3, 4 are all of similar dimension, particularly of similar or equal cross section.

Alternatively and deviating from the indication of Figure 3, it is contemplated that only the similar tube rows 3, 4 (pointing upwards) are of equal dimension and e.g. a cross section of the further tubes 5 (pointing downwards) differs from that one of the similar tubes. More particularly, according to the invention - for optimization of the fluid flow and the avoidance of flow instability in any type of exchanger application - the downflow tube's cross section(s) is/are smaller than that one of the upflow tubes 4. This advantageously allows to keep the downflow velocity at an optimum and/or a related downflow throughput (through the tubes) at a minimum, like in case of heat exchangers applied in an industrial economizer and/or evaporator. In turn, thereby instabilities in the feed water flow are reliably avoided.

Preferably, the inventive heat exchanger is free of any partition plates, crossovers and/or external piping, thereby maintaining a compact layout.

As well, the design of the inventive tube bundle may be configured such that it comprises more than two similar up- or downflow tubes 3 or related tube rows connecting a given bottom header 2b and the corresponding top header 2a.

Conditionally, the inventive advantages may also manifest in a design with a plurality of further up- or downflow tubes (or related rows) per header unit. This would, however, most probably imply as well a plurality, particularly a larger number, of the respectively other type of tube rows.

The inventive design stands further out for an optimized number of top headers 2a and bottom headers 2b. As shown by way of example only, the depicted heat exchange tube bundle 10 comprises a number of four bottom headers 2b and/or a number of four, top headers 2a. It is emphasized that the technical advantages are preferably intrinsic to the described configuration, e.g. number and size, of headers, upflow and downflow tube rows with which fluid flow properties may be tailored better than with any known heat exchanger design to the respective application.

The inventive heat exchanger may relate to a so-called "Accordion" economizer design, advantageously combining the design compactness and constructability of the harp design and the effectiveness of a harmonica design. Moreover, it allows to effectively avoid downflow instability by allowing a specific design of the downflow row's tube size, i.e. independently from the other tube rows. This results in a more compact, robust and easily constructed bundle with a far greater potential of heat recovery in the operation of related steam generators or a higher-ranking power plant (cf. Figure 4 below). Particularly, as compared to the design shown in Figure 1, the inventive concept excels in a better heating surface effectiveness and - at the same time - in a simpler construction due to a lack of crossover connections. Both advantages, in turn, result also in a cost advantage.

As compared to the "harmonica" design as illustrated in Figure 2, furthermore, a bundle compactness is increased due to a lower number of headers, and to a shorter module depth. Consequently, the steam generator's overall dimension can also advantageously be reduced and shop constructability improved.

Figure 4 shows a simplified sketch of at least parts of a combined cycle power plant 100 illustrating the basic principle of its assembly, e.g. comprising a heat exchanger 10, such as the inventive heat exchanger configured for an application of heat recovery steam generator 40. Also an evaporator assembly 20 as well as a superheater 30 are shown. All of these components are preferably functionally coupled in an expedient way. Moreover, the plant 100 may comprise or be connected to the flue gas path of a gas turbine GT via which an exhaust gas G is exposed to the superheater 40 (or vice versa). Then the superheater 30 is connected or coupled to a hot steam path - fed in by a steam drum 21 of the evaporator section 20. The steam ST is then expediently provided to a steam turbine of the plant 100, or to another facilty. Downstream of the superheater assembly 30 - also comprising dedicated tube bundles for steam generation and/or heat transfer - the exhaust gas G enters the tube bundle of the evaporator 20. Later, in a rather low temperature section, the gas G finally arrives at the economizer tube bundle 10 for efficient heat transfer operation of the plant 100.

However, the assembly could also be different, such as using the heat exchanger 10 in another setup, like in a configuration for a heat transfer from any kind of waste heat and the generation of related process steam (without any superheater or turbines involved). Thus, besides the above-described (plant) applications, the improved heat exchanger design imparts the outlined technical advantages as well to other application, such as downscaled and/or domestic application of heat exchangers.

## Claims

1. A heat recovery steam generator (40) of horizontal gas path design comprising a heat exchanger tube bundle (10) of horizontal gas path design, wherein the heat exchanger tube bundle is functionally set up for transferring heat from a flue gas (G) to a feed water or condensate when passing it through the tube bundle, the tube bundle (10) comprising a sequence (1) of bottom headers (2b) and corresponding top headers (2a), wherein each unit (1, 1a) of the sequence comprises a row of tubes, wherein each bottom header (2b) is fluidly connected to a corresponding top header (2a) via at least two similar tube rows (3, 4, 5) for passing a fluid in a first direction between the bottom header (2b) and the top header (2a), respectively, and wherein each unit of the sequence further comprises at least one further tube row (3, 4, 5) in fluid connection with one of said bottom and top header, wherein the further tube row is further fluidly connected to a header of a subsequent unit (1, 1b), and wherein the further row's tubes (3, 4, 5) are configured for passing the fluid in a second direction opposite to the first direction,
**characterized in**
**that** the cross section of the further row's tubes (3, 4, 5) is smaller than that one of the similar row's tubes (3, 4, 5).

2. The recovery steam generator (40) according to claim 1 with the heat exchanger tube bundle (10) comprising only two similar tube rows (3, 4, 5) and only one further tube row (3, 4, 5).

3. The recovery steam generator (40) according to claim 1 or 2, wherein the heat exchanger tube bundle (10) is configured for only one fluid pass per tube row.

4. The recovery steam generator (40) according to one of the previous claims, wherein the similar row's tubes (3, 4, 5) are configured for an upflow fluid pass, and the further row's tubes (3, 4, 5) are configured for a downflow fluid pass.

5. The recovery steam generator (40) according to one of the previous claims, wherein the similar row's tubes (3, 4, 5) are of equal dimension.

6. The recovery steam generator (40) according to one of claims 1 and 3 to 5, the heat exchanger tube bundle (10) comprising more than two similar tube rows (3, 4, 5) per unit.

7. The recovery steam generator (40) according to one of claims 1 and 3 to 6, the heat exchanger tube bundle (10) comprising more than two further tube rows (3, 4, 5) per unit.

8. The recovery steam generator (40) according to one of the previous claims, the heat exchanger tube bundle (10) being free of partition plates (9), crossovers (6) and/or external piping.

9. A combined cycle power plant (100) comprising the heat recovery steam generator (40) according to one of the previous claims, wherein the heat exchanger tube bundle (10) is applied in an economizer and/or an evaporator of the power plant (100).

## Patentansprüche

1. Wärmerückgewinnungsdampferzeuger (40) mit horizontaler Gaswegkonstruktion, umfassend ein Wärmetauscherrohrbündel (10) mit horizontaler Gaswegkonstruktion, wobei das Wärmetauscherrohrbündel funktionell eingerichtet ist, um Wärme von einem Rauchgas (G) an ein Speisewasser oder Kondensat zu übertragen, wenn es durch das Rohrbündel geleitet wird, wobei das Rohrbündel (10) eine Abfolge (1) von unteren Sammelrohren (2b) und entsprechenden oberen Sammelrohren (2a) umfasst, wobei jede Einheit (1, 1a) der Abfolge eine Reihe von Rohren umfasst, wobei jedes untere Sammelrohr (2b) über mindestens zwei ähnliche Rohrreihen (3, 4, 5) mit einem entsprechenden oberen Sammelrohr (2a) fluidisch verbunden ist, um ein Fluid in einer ersten Richtung zwischen dem unteren Sammelrohr (2b) beziehungsweise dem oberen Sammelrohr (2a) zu leiten, und wobei jede Einheit der Abfolge ferner mindestens eine weitere Rohrreihe (3, 4, 5) umfasst, die in Fluidverbindung mit einem des unteren und des oberen Sammelrohrs steht, wobei die weitere Rohrreihe ferner mit einem Sammelrohr einer nachfolgenden Einheit (1, 1b) fluidisch verbunden ist, und wobei die Rohre (3, 4, 5) der weiteren Reihe zum Leiten des Fluids in einer zweiten Richtung, die der ersten Richtung entgegengesetzt ist, konfiguriert sind, **dadurch gekennzeichnet, dass** der Querschnitt der Rohre (3, 4, 5) der weiteren Reihe kleiner als der der Rohre (3, 4, 5) der ähnlichen Reihe ist.

2. Rückgewinnungsdampferzeuger (40) nach Anspruch 1, wobei das Wärmetauscherrohrbündel (10) nur zwei ähnliche Rohrreihen (3, 4, 5) und nur eine weiteren Rohrreihe (3, 4, 5) umfasst.

3. Rückgewinnungsdampferzeuger (40) nach Anspruch 1 oder 2, wobei das Wärmetauscherrohrbündel (10) für nur einen Fluiddurchgang pro Rohrreihe konfiguriert ist.

4. Rückgewinnungsdampferzeuger (40) nach einem der vorstehenden Ansprüche, wobei die Rohre (3, 4, 5) der ähnlichen Reihe für einen Aufwärtsströmungsfluiddurchgang konfiguriert sind und die Rohre (3, 4, 5) der weiteren Reihe für einen Abwärtsströmungsfluiddurchgang konfiguriert sind.

5. Rückgewinnungsdampferzeuger (40) nach einem der vorstehenden Ansprüche, wobei die Rohre (3, 4, 5) der ähnlichen Reihe eine gleiche Abmessung besitzen.

6. Rückgewinnungsdampferzeuger (40) nach einem der Ansprüche 1 und 3 bis 5, wobei das Wärmetauscherrohrbündel (10) mehr als zwei ähnliche Rohrreihen (3, 4, 5) pro Einheit umfasst.

7. Rückgewinnungsdampferzeuger (40) nach einem der Ansprüche 1 und 3 bis 6, wobei das Wärmetauscherrohrbündel (10) mehr als zwei weitere Rohrreihen (3, 4, 5) pro Einheit umfasst.

8. Rückgewinnungsdampferzeuger (40) nach einem der vorstehenden Ansprüche, wobei das Wärmetauscherrohrbündel (10) frei von Trennplatten (9), Rohrformstücken (6) und/oder externen Rohrleitungen ist.

9. Gas- und Dampfturbinenkraftwerk (100), umfassend den Wärmerückgewinnungsdampferzeuger (40) nach einem der vorstehenden Ansprüche, wobei das Wärmetauscherrohrbündel (10) in einem Economiser und/oder einem Verdampfer des Kraftwerks (100) eingesetzt wird.

## Revendications

1. Chaudière de récupération (40) de conception à trajet de gaz horizontal comprenant un faisceau de tubes d'échangeur de chaleur (10) de conception à trajet de gaz horizontal, dans laquelle le faisceau de tubes d'échangeur de chaleur est fonctionnellement conçu pour le transfert de chaleur d'un gaz de combustion (G) à une eau d'alimentation ou un condensat lors de son passage à travers le faisceau de tubes, le faisceau de tubes (10) comprenant une séquence (1) de collecteurs inférieurs (2b) et de collecteurs supérieurs correspondants (2a), dans laquelle chaque unité (1, 1a) de la séquence comprend une rangée de tubes, dans laquelle chaque collecteur inférieur (2b) est relié fluidiquement à un collecteur supérieur correspondant (2a) par l'intermédiaire d'au moins deux rangées similaires de tubes (3, 4, 5) pour le passage d'un fluide dans une première direction entre le collecteur inférieur (2b) et le collecteur supérieur (2a), respectivement, et dans laquelle chaque unité de la séquence comprend en outre au moins une rangée supplémentaire de tubes (3, 4, 5) en liaison fluidique avec l'un parmi ledit collecteur inférieur et supérieur, dans laquelle la rangée supplémentaire de tubes est en outre reliée fluidiquement à un collecteur d'une unité suivante (1, 1b), et dans laquelle les tubes de la rangée supplémentaire (3, 4, 5) sont conçus pour le passage du fluide dans une seconde direction opposée à la première direction, **caractérisée sen ce que** la section transversale des tubes de la rangée supplémentaire (3, 4, 5) est plus petite que celle des tubes de la rangée similaire (3, 4, 5).

2. Chaudière de récupération (40) selon la revendication 1, le faisceau de tubes d'échangeur de chaleur (10) ne comprenant que deux rangées similaires de tubes (3, 4, 5) et une seule rangée supplémentaire de tubes (3, 4, 5).

3. Chaudière de récupération (40) selon la revendication 1 ou 2, dans laquelle le faisceau de tubes d'échangeur de chaleur (10) est conçu pour un seul passage de fluide par rangée de tubes.

4. Chaudière de récupération (40) selon l'une des revendications précédentes, dans laquelle les tubes de la rangée similaire (3, 4, 5) sont conçus pour un passage de fluide ascendant, et les tubes de la rangée supplémentaire (3, 4, 5) sont conçus pour un passage de fluide descendant.

5. Chaudière de récupération (40) selon l'une des revendications précédentes, dans lequel les tubes de la rangée similaire (3, 4, 5) sont de dimension égale.

6. Chaudière de récupération (40) selon l'une des revendications 1 et 3 à 5, le faisceau de tubes d'échangeur de chaleur (10) comprenant plus de deux rangées similaires de tubes (3, 4, 5) par unité.

7. Chaudière de récupération (40) selon l'une des revendications 1 et 3 à 6, le faisceau de tubes d'échangeur de chaleur (10) comprenant plus de deux rangées supplémentaires de tubes (3, 4, 5) par unité.

8. Chaudière de récupération (40) selon l'une des revendications précédentes, le faisceau de tubes d'échangeur de chaleur (10) étant dépourvu de disques de séparation (9), de jonctions (6) et/ou de tuyauterie externe.

9. Centrale électrique à cycle combiné (100) comprenant la chaudière de récupération (40) selon l'une des revendications précédentes, dans laquelle le faisceau de tubes d'échangeur de chaleur (10) est appliqué dans un économiseur et/ou un évaporateur de la centrale électrique (100).
